# EUROPÄISCHE PATENTANMELDUNG

(11) **EP 4 818 909 A1**
(43) Veröffentlichungstag der Anmeldung: **07.10.2026**
(21) Anmeldenummer: 25168434.6
(22) Anmeldetag: 04.04.2025
(51) Int. Cl.: G06F 11/3668, G06F 11/3604

(54) **VERFAHREN ZUR VERIFIKATION EINES COMPUTERPROGRAMMS**

(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Leinberger, Martin, 56073 Koblenz (DE); Flexeder, Andrea, 71729 Erdmannhausen (DE); Hecking-Harbusch, Jesko, 71229 Leonberg (DE); Rausch, Alexander, 76297 Stutensee (DE)

(57) **Zusammenfassung**

Gemäß verschiedenen Ausführungsformen wird ein Verfahren zur Verifikation eines Computerprogramms beschrieben, aufweisend Zuführen von Programmcode (201) mindestens einer Funktion des Computerprogramms zu einem generativen Sprachmodell (108, 203) und Auffordern des generativen Sprachmodells (108, 203), Bedingungen, die von Variablen, die von der mindestens einen Funktion verarbeitet werden, erfüllt werden müssen, um Laufzeitfehler zu vermeiden, zu ermitteln, Erzeugen von Testdaten für den Programmcode (201), die eine von dem generativen Sprachmodell (108, 203) in Reaktion auf das Auffordern ausgegebene Menge von Bedingungen erfüllen, und Verifizieren des Programmcodes (201) unter Verwendung der Testdaten.

## Beschreibung

Die vorliegende Offenbarung bezieht sich auf Verfahren zur Verifikation eines Computerprogramms.

Ein wesentlicher Bestandteil der Entwicklung von Softwareanwendungen ist die Verifikation. Verifiziert wird typischerweise durch Zufuhr von Testdaten zu einem Computerprogramm und prüfen, ob das Computerprogramm korrekt reagiert. Solche Testdaten können automatisiert, z.B. oder Verwendung von generativen maschinellen Lernmodellen, erzeugt werden. Es sollten jedoch nicht beim Verifizieren Fehler auftreten, die darauf zurückzuführen sind, dass die Testdaten nicht korrekt generiert wurden, z.B. Testdaten, die Anforderungen der Schnittstellen von Funktionen des Computerprogramms nicht erfüllen, da dies die Effizienz der Verifikation auf die eigentlichen Fehler im Programmcode erheblich reduziert. Es sind dementsprechend Herangehensweisen zur Verifikation von Computerprogrammen wünschenswert, die solche Fehler beim Verifizieren vermeiden und eine zuverlässige Evaluierung des Programmverhaltens ermöglichen.

Gemäß verschiedenen Ausführungsformen wird ein Verfahren zur Verifikation eines Computerprogramms bereitgestellt, aufweisend Zuführen von Programmcode mindestens einer Funktion des Computerprogramms zu einem generativen Sprachmodell und Auffordern des generativen Sprachmodells, Bedingungen, die von Variablen, die von der mindestens einen Funktion verarbeitet werden, erfüllt werden müssen, um Laufzeitfehler zu vermeiden, zu ermitteln, Erzeugen von Testdaten für den Programmcode, die eine von dem generativen Sprachmodell in Reaktion auf das Auffordern ausgegebene Menge von Bedingungen erfüllen, und Verifizieren des Programmcodes unter Verwendung der Testdaten.

Die Verifikation kann durch Testen (also konkrete Variablenbelegungen und Prüfung des Ergebnisses) oder auch formale Verifikation (z.B. abstrakte Interpretation) erfolgen. Beispiele für Verifikationstechniken sind Bounded-Model-Checking und symbolische Ausführung. Die korrekte Anwendung von Vorbedingungen und Generierung von /Testdaten verbessert die Präzision und Effizienz solcher Verifikationstechniken und ermöglicht dadurch eine zuverlässige Evaluierung des Programmverhaltens.

Das Auffordern (also das Zuführen von ein oder mehreren Prompts) an das generative Sprachmodell braucht nicht explizit die Anweisung zu enthalten, dass Laufzeitfehler vermieden werden müssen. Dies ergibt sich daraus, dass das generative Sprachmodell Bedingungen ermitteln soll, die erfüllt werden müssen, wie z.B. Abhängigkeiten oder Einschränkungen von Wertebereichen der Variablen. Die "Menge von Bedingungen" enthält typischerweise mehrere Bedingungen, kann bei einfachen Funktionen aber auch nur eine Bedingung enthalten. Die Bedingungen können Bedingungen an Werte sein, wie z.B. zulässige Wertebereiche und insbesondere, ob ein Zeiger null sein darf. Die Bedingungen können auch Abhängigkeiten zwischen Variablen widerspiegeln, z.B. enthält eine Variable die Länge des Speicherbereichs, auf die eine andere Variable zeigt und muss dementsprechend beispielsweise eine bestimmte Mindestgröße haben. Die Testdaten enthalten beispielsweise solche Werte, die die Bedingungen (Anforderungen) an die Werte erfüllen.

Das oben beschriebene Verfahren ermöglicht ein effizientes Verifizieren eines Computerprogramms, da unter Verwendung der ermittelten Bedingungen Testdaten so erzeugt werden können, dass keine Laufzeitfehler aufgrund von falsch ausgestalteten Testdaten verursacht werden. Solche Laufzeitfehler würden zu verschwendeten Testdurchläufen führen oder sogar zu falschen Rückschlüssen über die Korrektheit des Computerprogramms.

Unter Verwendung der ermittelten Bedingungen, die gemäß dem obigen Verfahren automatisiert ermittelt werden können, können dann auch automatisiert Testdaten erzeugt werden. Damit kann die Verifikation eines Computerprogramms vollständig automatisiert erfolgen, vorausgesetzt die Korrektheit der Ergebnisse kann auch automatisch geprüft werden.

Im Folgenden werden verschiedene Ausführungsbeispiele angegeben.

Ausführungsbeispiel 1 ist ein Verfahren zur Verifikation eines Computerprogramms, wie oben beschrieben.

Ausführungsbeispiel 2 ist ein Verfahren nach Ausführungsbeispiel 1, aufweisend Überprüfen von ein oder mehreren von dem generativen Sprachmodell ermittelten Bedingungen durch Erzeugen von Eingabedaten für die mindestens eine Funktion, die die eine oder mehreren Bedingungen erfüllen und
Prüfen, ob bei Ausführung der mindestens einen Funktion für die erzeugten Eingabedaten ein Laufzeitfehler auftritt und in Reaktion darauf, dass bei Ausführung der mindestens einen Funktion für die erzeugten Eingabedaten ein Laufzeitfehler auftritt, Auffordern des generativen Sprachmodells, die eine oder mehreren Bedingungen zu überarbeiten.

Das Auffordern kann somit ein wiederholtes Auffordern des generativen Sprachmodells sein, z.B. zumindest bis keine Laufzeitfehler für Eingabedaten, die gemäß den von dem generativen Sprachmodell ausgegebenen Bedingungen ausgestaltet sind (oder eine bestimmte Anzahl von Iterationen erreicht ist), auftreten:
Ausführungsbeispiel 3 ist ein Verfahren nach Ausführungsbeispiel 2, wobei das Auffordern ein wiederholtes Auffordern des generativen Sprachmodells, von ihm ausgegebene Bedingungen zu überarbeiten, bis Eingabedaten, die die ausgegebenen Bedingungen erfüllen, zu keinem Laufzeitfehler der mindestens einen Funktion führen, aufweist.

Ausführungsbeispiel 4 ist ein Verfahren nach einem der Ausführungsbeispiele 1 bis 3, aufweisend Überprüfen von ein oder mehreren von dem generativen Sprachmodell ermittelten Bedingungen durch Erzeugen von relaxierten Eingabedaten für die mindestens eine Funktion, die die eine oder mehreren Bedingungen verletzen und
Prüfen, ob bei Ausführung der mindestens einen Funktion für die erzeugten relaxierten Eingabedaten ein Laufzeitfehler auftritt und in Reaktion darauf, dass bei Ausführung der mindestens einen Funktion für die erzeugten relaxierten Eingabedaten kein Laufzeitfehler auftritt, Auffordern des generativen Sprachmodells, die eine oder mehreren Bedingungen zu überarbeiten.

Das Auffordern kann somit ein wiederholtes Auffordern des generativen Sprachmodells sein, z.B. bis keine Relaxierung der von dem generativen Sprachmodell ausgegebenen Bedingungen gefunden werden kann (oder eine bestimmte Anzahl von Iterationen erreicht ist):
Ausführungsbeispiel 5 ist ein Verfahren nach Ausführungsbeispiel 4, wobei das Auffordern ein wiederholtes Auffordern des generativen Sprachmodells, von ihm ausgegebene Bedingungen zu überarbeiten, bis Eingabedaten, die die ausgegebenen Bedingungen verletzen, zu Laufzeitfehlern der mindestens einen Funktion führen, aufweist.

Das Relaxieren kann bei festen Schranken (z.B. Wertebereichen für Variable) einfach dadurch erfolgen, dass die Schranken aufgeweicht werden (z.B. ein oder mehrere Schranken um Eins erhöht werden). Es können zur Relaxierung einfach ein oder mehrere Bedingungen weggelassen werden. Dazu können verschiedene Heuristiken zum Einsatz kommen (z.B. zufälliges Weglassen von Bedingungen, Weglassen einzelner Bedingungen, wobei durch alle Bedingungen durchgegangen wird, etc.) Es werden für die Überprüfung hinsichtlich Relaxierung dann beispielsweise Eingabedaten derart erzeugt, dass sie die ein oder mehreren Bedingungen, die relaxiert wurden, ohne deren Relaxierung verletzen (aber in ihrer relaxierten Version erfüllen).

Ausführungsbeispiel 6 ist ein Verfahren nach einem der Ausführungsbeispiele 1 bis 5, wobei die Bedingungen ein oder mehrere Abhängigkeiten zwischen den Variablen, die von der mindestens einen Funktion verarbeitet werden, umfassen.

Beispielsweise kann eine Datenstruktur wie ein Array eine bestimmte Dimension aufweisen müssen (d.h. z.B. ein Speicherbereich von einer bestimmten Größe definiert worden sein), die der Funktion explizit als Argument übergeben wird. Durch Erzeugen von Testdaten, die solche Abhängigkeiten berücksichtigen, können durch die Verletzung solcher Abhängigkeiten verursachte Laufzeitfehler beim Verifizieren vermieden werden. Des Weiteren erlaubt dieses Verfahren die Erstellung aussagekräftiger Testszenarien in Bezug auf die Größe der Eingangsdaten (wie z.B. Arrays). Dies beinhaltet die Prüfung nicht nur trivialer Längen wie 0 und 1. sondern auch des Maximalwerts, was eine umfangreichere und auch realistischere Beurteilung der Funktionalität und Fehlerbehandlung ermöglicht. Es können also Testdaten erzeugt werden, die die Bedingungen "ausreizen" also z.B. Werte enthalten, den Grenzen entsprechend, die durch die Bedingungen gegeben sind.

Ausführungsbeispiel 7 ist ein Verfahren nach einem der Ausführungsbeispiele 1 bis 6, wobei die Bedingungen ein oder mehrere Bedingungen an ein oder mehrere Argumente, mit der die Funktion aufgerufen wird, umfassen oder sind.

Bedingungen können sich also direkt auf Argumente der Funktion beziehen.

Ausführungsbeispiel 8 ist ein Verfahren nach einem der Ausführungsbeispiele 1 bis 7, wobei die Bedingungen ein oder mehrere Abhängigkeiten zwischen ein oder mehreren Argumenten, mit der die Funktion aufgerufen wird, und ein oder mehreren Datenstrukturen, die vor dem Aufruf der Funktion definiert wurden, sind.

Die Bedingungen können also insbesondere Bedingungen enthalten, die Abhängigkeiten zwischen Argumenten der Funktion und Datenstrukturen (und damit Mengen von Variablen), mit denen die Funktion arbeitet, aufweisen, wie z.B. Abhängigkeiten zwischen Dimensionen. Ein Beispiel hierfür ist das folgende Ausführungsbeispiel 9:
Ausführungsbeispiel 9 ist ein Verfahren nach einem der Ausführungsbeispiele 1 bis 8, wobei die Bedingungen die Bedingung umfassen, dass eine Adresse, die der Funktion als Argument gegeben wird, auf einen Speicherbereich zeigt, der mit einer bestimmten Größe definiert wurde.

Ausführungsbeispiel 10 ist ein Verfahren nach einem der Ausführungsbeispiel 1 bis 9, aufweisend Zuführen einer Vorlage für eine Spezifikation der Bedingungen und Auffordern des generativen Sprachmodells, die Bedingungen gemäß der Vorlage auszugeben.

Beispielsweise kann eine Vorlage einer Schnittstellenspezifikation, z.B. in JSON-Format vorgegeben werden. Dies ermöglicht die Weiterverarbeitung der ein oder mehreren Bedingungen, insbesondere die Erzeugung von Testdaten, die die ein oder mehreren Bedingungen erfüllen.

Ausführungsbeispiel 11 ist ein Verfahren nach Ausführungsbeispiel 10, wobei der Programmcode der mindestens eine Funktion zumindest ein Teil eines Programmcodes für ein Steuerungsprogramm für eine Robotervorrichtung oder ein anderes technisches System ist.

Ausführungsbeispiel 12 ist ein Verfahren nach einem der Ausführungsbeispiele 1 bis 11, aufweisend, falls das Verifizieren des Programmcodes mittels der Testdaten ein positives Verifikationsergebnis liefert, Steuern der Robotervorrichtung mittels des Programmcodes.

Ausführungsbeispiel 13 ist ein Datenverarbeitungssystem zur Verifikation von Programmcode, eingerichtet zum Durchführen eines Verfahrens nach einem der Ausführungsbeispiele 1 bis 12.

Ausführungsbeispiel 14 ist ein Computerprogramm mit Befehlen, die, wenn sie durch einen Prozessor ausgeführt werden, bewirken, dass der Prozessor ein Verfahren nach einem der Ausführungsbeispiele 1 bis 12 durchführt.

Ausführungsbeispiel 15 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 12 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt einen Computer für die Entwicklung und/oder das Verifizieren von Softwareanwendungen.
- Figur 2: veranschaulicht die Ermittlung einer oder mehrerer Bedingungen, die die Variablen, mit denen Programmcode arbeitet, erfüllen muss.
- Figur 3: zeigt ein Ablaufdiagramm, das ein Verfahren zur Verifikation eines Computerprogramms veranschaulicht.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

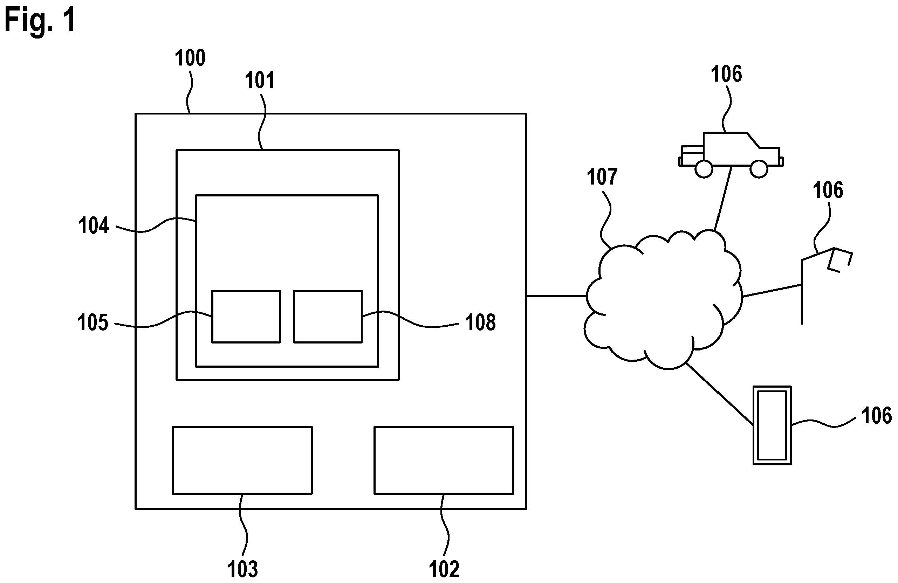

Figur 1 zeigt einen Computer 100 für die Entwicklung und/oder das Verifizieren von Softwareanwendungen.

Der Computer 100 weist eine CPU (Central Processing Unit) 101 und einen Arbeitsspeicher (RAM) 102 auf. Der Arbeitsspeicher 102 wird zum Laden von Programmcode verwendet, z.B. von einer Festplatte 103, und die CPU 101 führt den Programmcode aus.

Im vorliegenden Beispiel wird davon ausgegangen, dass ein Benutzer beabsichtigt, mit dem Computer 100 eine Softwareanwendung zu entwickeln und/oder zu verifizieren.

Dazu führt der Benutzer eine Softwareentwicklungsumgebung 104 auf der CPU 101 aus.

Die Softwareentwicklungsumgebung 104 ermöglicht es dem Benutzer, eine Anwendung 105 für verschiedene Geräte 106, also ein Ziel-Hardware, wie eingebettete Systeme zum Steuern von Robotervorrichtungen, inklusive Roboterarme und autonome Fahrzeuge, oder auch für mobile (Kommunikations-)Geräte, zu entwickeln und zu verifizieren. Dazu kann die CPU 101 als Teil der Softwareentwicklungsumgebung 104 einen Emulator ausführen, um das Verhalten des jeweiligen Geräts 106 zu simulieren, für das eine Anwendung 105 entwickelt wird oder wurde. Wird sie nur zur Verifikation einer Software aus anderer Quelle eingesetzt, kann die Softwareentwicklungsumgebung 104 auch als Softwaretestumgebung oder Softwareverifikationsumgebung angesehen werden bzw. ausgestaltet sein.

Der Benutzer kann die fertige Anwendung 105 über ein Kommunikationsnetzwerk 107 an entsprechende Geräte 106 verteilen. Statt über ein Kommunikationsnetzwerk 107 kann dies auch auf andere Weise erfolgen, beispielsweise mittels eines USB-Sticks.

Bevor dies geschieht, sollte der Benutzer jedoch die Anwendung 105 verifizieren, um zu vermeiden, dass eine nicht ordnungsgemäß funktionierende Anwendung 105 an die Geräte 106 verteilt wird.

Die Verifikation erfolgt typischerweise mittels Zufuhr zu Testeingaben der Anwendung 105 oder einzelnen Funktionen der Anwendung 105, d.h. es können einzelne Funktionen der Anwendung 105 mit bestimmten Testeingaben (Argumenten) aufgerufen werden und dann geprüft werden, ob sie eine korrekte Ausgabe liefern. Diese Testeingaben sollte aber so ausgestaltet sein, dass sie den Anforderungen der Argumente der jeweiligen Funktion entsprechen (die auch im Einsatz der Funktion in der Anwendung erfüllt werden), sodass nicht mit Testeingaben verifiziert wird, die zu Laufzeitfehlern führen und damit nutzlose Testdurchläufe verursachen, da die Testeingaben nicht für die jeweilige zu verifizierende Funktion geeignet sind, und auch eine bessere Abdeckung durch Generierung sinnvoller und realistischer Testdaten (bezogen auf die Größen wie nichttriviale Dimensionen) erreicht wird.

Um geeignete Testeingaben für eine zu verifizierende Funktion zu erzeugen, wird deshalb gemäß verschiedenen Ausführungsformen eine Herangehensweise für die eine automatisierte Identifizierung und Verifikation von Vorbedingungen von Funktionen in Form von Zusammenhängen und Abhängigkeiten zwischen Eingangsvariablen und (abstrakten) Datenstrukturen bereitgestellt. Dabei können nicht nur explizite Abhängigkeiten zwischen den Variablen berücksichtigt werden, sondern auch implizite Annahmen über die Eigenschaften der Eingabedaten (Funktionsparameter). Dazu gehören zum Beispiel Bedingungen, die nicht direkt durch eine Variable kodiert sind, wie die Mindestgröße eines durch einen Zeiger referenzierten Speicherbereichs oder auch andere strukturelle/semantische Einschränkungen, die für die korrekte Funktionsweise erforderlich sind. Solche Zusammenhänge sind wie oben beschrieben unter anderem zum automatisierten Verifizieren einer Funktion (z.B. für Prüfung auf Korrektheit, d.h. Verifizierung) nützlich. Eine solche Verifikation ist insbesondere für sicherheitsrelevante Software essenziell, z.B. Steuerungssoftware für ein autonomes Fahrzeug.

Die Inferenz solcher Bedingungen (z.B. Grenzwerten für Variablen, Speicherbereichsgrößen etc.) ist entscheidend für Validierungstechniken wie Bounded-Model-Checking und symbolische Ausführung. Bei Ersterem begrenzen diese Bedingungen die Schleifendurchläufe zur effektiven Code-Analyse, wohingegen bei letzterem diese maßgeblich für die Generierung und Überprüfung der symbolischen Pfade sind. In beiden Fällen verbessern sie die Effizienz und Präzision der Validierung und ermöglichen aussagekräftige Programmverhaltensbewertungen.

In einem Programmcode bestehen oft implizite Beziehungen zwischen Variablen, die für das Verständnis, die korrekte Nutzung und auch für die Verifikation des Programmcodes unerlässlich sind. Während high-level Programmiersprachen wie C++ oder Java eine Abstraktion von Speicherverwaltung bieten (z.B. durch Klassen/Objekte), erlaubt C direkte Speicherzugriffe. Dies ermöglicht zwar eine feingranularere Kontrolle über die Datenrepräsentation und eine effiziente Speicherverwaltung, macht aber den Programmcode schwerer lesbar und analysierbar. Die Schwierigkeit der Variablenbeziehungsinferenz wird anhand eines klassischen Beispiels aus der linearen Algebra implementiert in der Programmiersprache C deutlich: Die Multiplikation zweier Matrizen A und B, deren Ergebnis in C gespeichert wird.

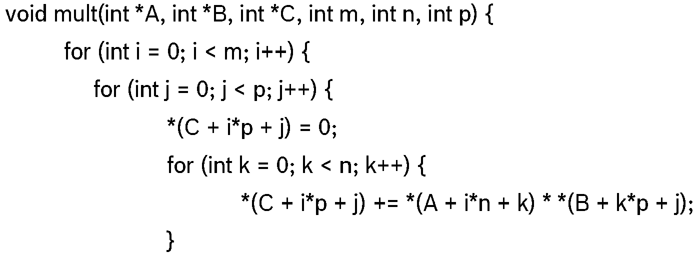

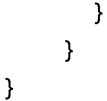

Die Variablen m, n und p repräsentieren die Dimensionen der Matrizen (Matrix A hat m Zeilen und n Spalten, Matrix B hat n Zeilen und p Spalten und Ergebnismatrix C hat m Zeilen und p Spalten). Die Datenstrukturen und deren Dimensionalität, die im Speicher auf die Referenzen A, B, C zeigen, sind für die korrekte Implementierung von zentraler Bedeutung, können in der Signatur der Funktion aber nicht in Beziehung gebracht werden (d.h. sind nicht allein aus "void mult(int *A, int *B, int *C, int m, int n, int p)" ermittelbar. Ebenso können Abhängigkeiten von z.B. globalen Variablen oder andere implizite Annahmen (z.B. dass ein Zeiger auf einen Speicherbereich bestimmter Größe zeigt) bestehen. Solche Abhängigkeiten und impliziten Annahmen sind im Allgemeinen die "Vorbedingungen" des "Contracts" der Funktion: Nur wenn die Vorbedingungen erfüllt sind, kann von der Funktion korrektes Verhalten erwartet werden.

Ein Mensch kann sich solche Zusammenhänge zwischen Variablen (hier $A ∈ {ℤ}^{m \times n} , B ∈ {ℤ}^{n \times p} , C ∈ {ℤ}^{m \times p}$) anhand von Kontext, Variablennamen und Verwendung der Variablen leicht erschließen, z.B. dass n sowohl die Spaltenanzahl von A als auch die Zeilenanzahl von B beschreibt. Eine Analyse durch einen Menschen ist aber nicht effizient und skaliert nicht. Idealerweise werden die Vorbedingungen an die Funktion annotiert, was ebenfalls durch den Entwickler erfolgen müsste. Praktisch wird dies aber so gut wie nie gemacht. Automatisiert lassen sich solche nicht-trivialen semantischen Zusammenhänge nicht für beliebige Programme herleiten.

Eine bestehende Hypothese über die Eingabewerte einer Funktion oder über bestimmte Datentypen kann mit formalen Methoden widerlegt oder bewiesen werden. Dies kann beispielsweise mit einer Datenflussanalyse geschehen, bei der versucht wird, alle relevanten Vorkommen der Variablen zu identifizieren und deren Wertebereiche und Abhängigkeiten herzuleiten. Es ist allerdings aufgrund der Komplexität und damit verbundenen zeitlichen Aufwands nicht möglich alle möglichen Hypothesen zu prüfen. Vor allem bei Programmen mit Zeigervariablen, komplexen Datenstrukturen (wie sie z.B. bei effizienten Implementierungen von Neuronalen Netzen vorkommen) und auch dynamischer Speicherverwaltung stößt die klassische Programmanalyse schnell an ihre Grenzen.

Die Vorbedingungs-Berechnung kann durch "rückwärts rechnen" von Abstrakter Interpretation durchgeführt werden. Auch solche Verfahren sind aber in der Praxis wertlos, da sie für realen Code sehr schnell sehr ungenau werden - insbesondere, wenn komplexe Datenstrukturen und Zeiger beteiligt sind.

Generative Sprachmodelle, insbesondere Large Language Models (LLMs) bieten eine alternative Herangehensweise, indem sie ähnlich wie menschliche Programmierer, über ein umfassendes kontextuelles Verständnis verfügen und Muster in Code erkennen können, die für die Identifikation von Variablenbeziehungen und Abhängigkeitsstrukturen relevant sind.

Beispielsweise können sie so mögliche Zusammenhänge zwischen Variablen erkennen, wie zwischen Zeigern auf Arrays oder Matrizen und Variablen, die deren Dimensionen oder Speicherbereiche definieren (wie in obigem Beispiel). Allerdings liefern LLMs konstruktionsbedingt in vielen Fällen auch unvollständige oder falsche Informationen ("Halluzination"), so dass diese unzuverlässig und für die Verifikation nicht nutzbar sind.

Gemäß verschiedenen Ausführungsformen wird ein generatives Sprachmodell (im Folgenden wird angenommen, dass dies ein LLM ist) mit einer Validierung durch traditionelle Verifikationsmethoden kombiniert, um Vorbedingungen von Funktionen in Form von Zusammenhängen und semantischen Beziehungen zwischen Variablen oder Datenstrukturen im Programmcode zu identifizieren und zu validieren. Außerdem können die Ergebnisse einer solchen Ermittlung von Vorbedingungen iterativ verbessert werden.

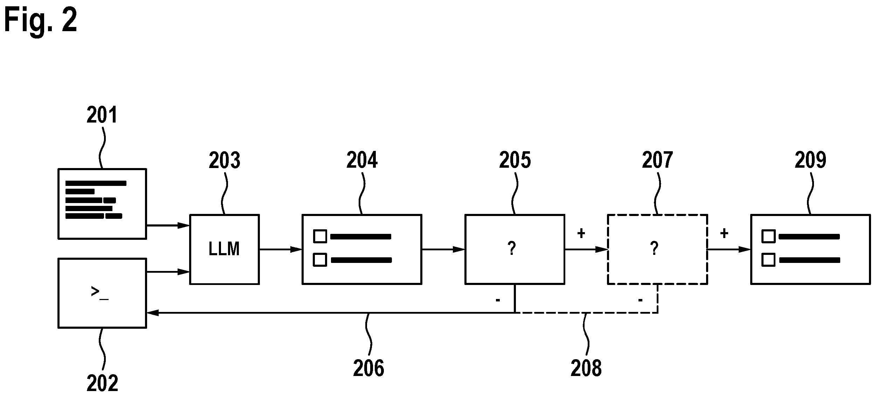

Figur 2 veranschaulicht die Ermittlung einer oder mehrerer (Vor-)Bedingungen, die die Variablen, mit denen Programmcode 201 arbeitet, erfüllen muss. Es wird im Folgenden angenommen, dass der Programmcode 201 der Programmcode einer Funktion ist. Es könnten aber auch z.B. auch mehrere Funktionen (und Methoden, Prozeduren etc.) auf einmal behandelt werden. Die Variablen werden an die Funktion geliefert, direkt als Argumente oder z.B. in einem Speicherbereich, auf den die Funktion zugreift.

Die Ermittlung erfolgt beispielsweise durch die Softwareentwicklungsumgebung 104, die dazu ein LLM 108, 203 verwendet.

Zunächst wird der Programmcode 201 dem LLM 203 mittels einer Anfrage 202 (d.h. eines Prompts) bereitgestellt. Der Prompt enthält eine Anforderung an das LLM 203, die Vorbedingung zu ermitteln und kann neben dem eigentlichen Programmcode 201 auch ergänzende Informationen enthalten, die geeignet sind, die Qualität der vom LLM generierten Ergebnisse verbessern. Hierzu zählen zum Beispiel Design-Dokumente, detaillierte Kommentare und Annotationen des Programmcodes, sowie Aufrufe der betreffenden Funktion oder zugehörige Tests.

Das LLM 203 führt (in Reaktion auf den Prompt 202) eine initiale Analyse des Programmcodes 201 durch und gibt (entsprechend der Anforderung im Prompt 202) eine strukturierte Auflistung aller Variablen bzw. Funktionsparameter oder Datenstrukturen, sowie deren wechselseitiger Beziehungen und sonstige Anforderungen zurück. Diese Antwort wird gemäß verschiedenen Ausführungsformen als Vorbedingungs-Hypothese 204 behandelt, d.h. als Hypothese bzgl. der Vorbedingung.

Im folgenden Schritt wird die Vorbedingungs-Hypothese 204 plausibilisiert, d.h. eine Überprüfung 205 der Hypothese durchgeführt. Dafür gibt es mehrere Möglichkeiten:
1. Eine Plausibilisierung mittels generierter Tests: Eine mögliche Form dieser Plausibilisierung ist eine erneute Anfrage an das LLM 203, um einen Funktionsaufruf mit Eingabedaten für die Funktion, die die zuvor extrahierten Abhängigkeiten (d.h. die ermittelte Vorbedingung) berücksichtigen, zu generieren. Der Funktionsaufruf kann auch auf andere Weise (insbesondere mittels eines anderen LLMS) generiert werden. Der generierte Funktionsaufruf kann anschließend ausgeführt werden, um zu testen, ob die vorgeschlagene Variablen- bzw. Parameterbelegung zu einem Laufzeitfehler bei Ausführung der Funktion führt. Zur Erkennung von Laufzeitfehlern kann das Programm mit gängigen Werkzeugen entsprechend instrumentiert werden. Ein solch auftretender Laufzeitfehler stellt ein konkretes Gegenbeispiel (gegen die Hypothese) dar und weist z.B. das auf ein vom LLM 203 fehlerhaft generalisiertes oder unzureichend abstrahiertes Speicherlayout hin. Dieses Gegenbeispiel wird dem LLM als Feedback 206 (mittels eines neuen Prompts 202) rückgeführt.
2. Eine Plausibilisierung mittels formaler Methoden: Auch traditionelle Programmanalysemethoden wie z.B. abstrakte Interpretation oder Bounded Model Checking können eingesetzt werden, um die vom LLM 203 abgeleiteten Abhängigkeitsbeziehungen (formal) zu verifizieren. Die zusätzlichen Informationen, die diese Methoden liefern (z.B. Gegenbeispiel oder genaue Stelle, wo sich ein Fehler ergibt) werden auch bei diesem Vorgehen dem LLM 203 als Feedback 206 rückgeführt und von dem LLM 203 für die Verbesserung der Vorbedingungs-Hypothese 204 genutzt.

Somit wird bei der Überprüfung 205 geprüft, ob die Funktion fehlerfrei ausführbar ist, wenn die Variablen die Vorbedingung gemäß der Vorbedingungs-Hypothese 204 erfüllen.

Es kann allerdings auch der Fall auftreten, dass die ermittelte Vorbedingungs-Hypothese 204 zu restriktiv ist, d.h. eigentlich wäre auch die fehlerfreie Ausführung der Funktion für weitere Eingaben möglich, die nicht die Vorbedingungen erfüllen.

Um dies zu prüfen, kann in einer optionalen Relaxierungsprüfung 207 die Vorbedingungs-Hypothese 204 gezielt schrittweise gelockert werden und dann jeweils eine Überprüfung der gelockerten Hypothese (entsprechend der Überprüfung 205) durchgeführt. Wenn dabei ein Fehler auftritt, deutet dies darauf hin, dass die Vorbedingungs-Hypothese 204 (zumindest ohne die zuletzt vorgenommene Lockerung) schon minimal restriktiv ist.

Ist eine Lockerung möglich, ohne dass ein Fehler auftritt, war die ursprüngliche Vorbedingungs-Hypothese 204 zu strikt. Dies wird als Feedback 208 an das LLM genutzt, um eine verbesserte (weniger strikte) Vorbedingungs-Hypothese 204 zu ermitteln.

Letztendlich wird eine ermittelte Vorbedingung 209 für die Funktion geliefert.

Diese hybride Herangehensweise kombiniert die "semantische Inferenzfähigkeit" von LLMs 203 mit etablierten statischen und auch dynamischen Analysetechniken. Im Falle einer falschen Vorbedingungs-Hypothese 204 (d.h. die Prüfung der Hypothese deckt einen Fehler auf) wird dies als das Feedback 206 dem LLM 203 mitgeteilt, worauf dieses eine neue (verbesserte) Vorbedingungs-Hypothese 204 liefern kann, wie z.B. mit einer korrigierten Mindest-Arraygröße.

Die oben beschriebene Herangehensweise zur automatisierten Ermittlung einer oder mehrerer (Vor-)Bedingungen für eine Funktion kann für verschiedene Anwendungen eingesetzt werden:
1. Verifikation der Korrektheit des Codes bzgl. Laufzeitfehler/Programmanalyse und symbolische Ausführung
   Automatisierte Programmanalysewerkzeuge brauchen präzise Informationen über Datenstrukturen/Speicherlayouts, um korrekte Programmausführungen symbolisch zu analysieren. Die durch die LLM-inferierte Datenstrukturanalyse gewonnenen Ergebnisse (Vorbedingung) ermöglichen die Bereitstellung entscheidender Schranken und auch Spezifikationen von Vorbedingungen, die z.B. auch als Codeannotationen in den Programmcode 201 eingefügt werden können. Dies verbessert sowohl die Effizienz als auch die Präzision symbolischer Ausführung erheblich. Durch exaktere und eindeutigere Speicherzugriffsinformationen kann das Laufzeitverhalten eines Programms genauer verifiziert werden. Es werden auch Verifikationsmethoden anwendbar gemacht, um z.B. die Fehlerfreiheit sicherheitskritischer Systeme zu prüfen bzw. formal zu beweisen. Es können insbesondere Verfahren (ggf. selbst LLM-basiert) verwendet werden, um Testbeispiele, die die ermittelte Vorbedingung erfüllen, zu generieren.
2. Testfall-/Testtreiber-Generierung
   Die inferierten Variablenbeziehungen und abstrakten Datenstrukturen entsprechend der ermittelten Vorbedingung 209 möglichen eine gezieltere Testfall- und Testtreibergenerierung, was auch die Validierung von speicherbezogenen Sicherheitseigenschaften ermöglicht. So können systematisch Testfälle generiert werden, die die Vorbedingung erfüllen, um z.B. Pufferüberläufe oder Out-of-Bounds-Speicherzugriffe erkennen und potenzielle Probleme im Programm aufzudecken.
3. Verbesserung der Code-Übersetzung und Code-Optimierung Die durch die Vorbedingungs-Ermittlung gewonnenen Informationen ermöglichen eine korrekte und effiziente Übersetzung von z.B. C-Programmen nach Rust, insbesondere durch eine sichere und auch idiomatische Abbildung von Speicherkonstrukten (Arrays in C versus Arrays in Rust). Auch hier profitiert der Übersetzungsansatz von den inferierten Speicherlayouts, so dass ein LLM-basierter Code-Übersetzungsschritt Speicher/Datenstrukturen im C-Quellcode erkennt und in sichere Rusttypische Abstraktionen überführen kann. Erst dies ermöglicht die Generierung von idiomatischem effizientem Rust-Code. Des Weiteren erlaubt die präzise Analyse auch ein gezieltes Refactoring und Performance-Optimierungen im Programmcode: So können z.B. ineffiziente Zugriffsmuster oder auch überflüssige Speicherallokationen erkannt werden. Durch die Verwendung effizienterer Datenstrukturen als auch eines besseren Speicherlayouts und -zugriffs kann dieser Ansatz für Laufzeit- und Speicheroptimierungen von Funktionen verwendet werden.

Als Beispiel soll die Vorbedingung für die schon oben als Beispiel gewählte obige Funktion zur Multiplikation von Matrizen ermittelt werden. Eine Bedingung ist hier z.B., dass der Wert der Variable m (hier ein Argument des Funktionsaufrufs) mit der Zeilenanzahl des Arrays A übereinstimmen muss. Diese Abhängigkeit ergibt sich aus der Arbeitsweise der Funktion, da sie eine Schleife enthält, die über m Zeilen des Arrays A iteriert. Ein LLM ist in der Lage, solche Zusammenhänge zu erkennen.

Der Prompt 202 zur Ermittlung für eine (einfache) Vorbedingungs-Hypothese 204 lautet beispielsweise

Analysiere den gegebenen C-code und beschreibe seine Funktionsschnittstelle mit dem Fokus auf Längenbezogene Zeiger unter Verwendung des JSON-Templates:

```
     ‴json
     {
               "Funktion_Name": "String",
               "Rückgabe_Typ": "String",
               "Parameter": [
               {
                      "Name": "String",
                      "Typ": "String",
               "Typ-Bedeutung": "String, entweder Matrix, Array oder Skalar,
               abhängig von der Variable ",
               "ist_Zeiger": "Boolesch (gesetzt für Zeiger)",
               "Länge": {
               "verknüpft_mit": [
               {
               "Name des Parameters/der Variable ",
               "Kontext": "ob die Variable die minimale Länge repräsentiert, ein
               Offset, oder ob es eine andere Beziehung gibt "
               }
              ],
               "minimale_Größe": "String, der die Anforderung bzgl. minimaler
               Größe angibt für den Fall, dass der Parameter ein Array oder ei-
               ne Matrix ist; weglassen sonst," } }
              }
     }
     ]
            "lokale_Variablen": [
            "Name": "String",
            "Typ": "String",
      ]
     }
     ‴
```

Der C-Code ist wie folgt:

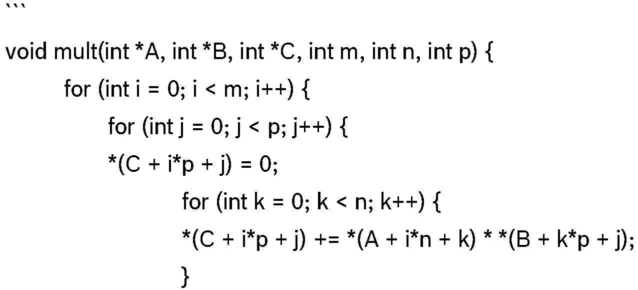

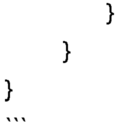

Das LLM 203 liefert in Reaktion auf diesen Prompt z.B. die folgende Vorbedingungs-Hypothese im JSON-Format (gekürzt):

```
 {
  "Funktion_Name": "mult",
  "Rückgabe_Typ": "void",
  "Parameter": [
  {
        "Name": "A",
        "Typ": "int",
        "Typ-Bedeutung": "Array",
        "Länge": {
               "verknüpft_mit": [
               {
                      "m",
                      "Kontext": "repräsentiert die minimale Länge des Arrays"
              },
               {
                      "n",
                      "Kontext": "repräsentiert die minimale Länge des Arrays"
              }
            ],
       }
 },
 {
        "Name": "B",
        "Typ": "int",
        "Typ-Bedeutung": "Array",
        "ist_Zeiger": wahr,
        "Länge": {
               "verknüpft_mit": [
               {
                      "n",
                      "Kontext": "repräsentiert die minimale Länge des Arrays"
              }
               {
                      "p",
                      "Kontext": "repräsentiert die minimale Länge des Arrays"
              }
       ],
       ...
```

Alternativ könnte im Prompt auch gefordert werden, dass die Annotationen in anderer Form, z.B. direkt im Code, erfolgen.

Insbesondere enthält die Vorbedingungs-Hypothese 204 bei der obigen JSON-Ausgabe, dass das Array A minimal die Dimension mxn haben muss.

Bei der Überprüfung 205 würde jetzt (z.B. durch einen weiteren LLM-Aufruf, bei dem man die Vorbedingungs-Hypothese 204 einfügt oder auf sie verweist) z.B. ein Beispielaufruf der Funktion mult wie folgt generiert werden

```
 int main() {
        int A[2][3] = {{1, 2, 3}, {4, 5, 6}};
        int B[3][2] = {{1, 2}, {3, 4}, {5, 6}};
        int C[2][2];
        mult(&A[0][0], &B[0][0], &C[0][0], 2, 3, 2);
        return 0;
       }
```

Die Softwareentwicklungsumgebung 104 führt beispielsweise diesen Beispielaufruf kann aus werden, um zu testen, ob die vom LLM 203 gelieferte Vorbedingungs-Hypothese 204 zu einem Laufzeitfehlern führt. Dazu kann sie z.B. das zu verifizierende Programm 105 bzgl. Laufzeitfehler-Prüfungen automatisch instrumentieren, wie es z.B. beim Fuzzing geschieht.

Die obige Vorbedingungs-Hypothese 204 ist in diesem Beispiel korrekt und würde zu keinem Laufzeitfehler führen. Würde aber z.B. beim Array C unter "verknüpft_mit" die falsche Information

```
 {
        "pxp",
        "Kontext": "repräsentiert die minimale Länge des Arrays"
 }
```

stehen, so könnte der Beispielaufruf beispielsweise so aussehen:

```
 int main() {
        int A[3][3] = {{1, 2, 3}, {4, 5, 6}, {7, 8, 9}};
        int B[3][2] = {{1, 2}, {3, 4}, {5, 6}};
        int C[2][2];
        mult(&A[0][0], &B[0][0], &C[0][0], 3, 3, 2);
        return 0; }
```

Als Testdaten für das Verifizieren der Funktion mult können hier die Werte der Arrays {{1, 2, 3}, {4, 5, 6}, {7, 8, 9}} und {{1, 2}, {3, 4}, {5, 6}}, der Adressen der drei Arrays und die Parameter 3, 3 ,2 gesehen werden (wobei die Adressen nicht explizit generiert werden, sondern sich durch die Definition der drei Arrays zur Laufzeit ergeben; nichtsdestotrotz hängen sie im Allgemeinen von der Größe der definierten Arrays ab).

Dies führt zu einem Laufzeitfehler, denn der Aufruf mit einem C der Größe 2x2 funktioniert nicht für die definierten Arrays: dies liegt daran, dass der angelegte Speicher für C zu klein ist. C müsste als 3x2 und nicht 2x2 definiert sein, um den Laufzeitfehler zu vermeiden.

Tritt ein Laufzeitfehler auf, wird das LLM 203 aufgefordert, eine neue Vorbedingungs-Hypothese 204 generieren (z.B. mit der Information, dass die zuvor gelieferte Vorbedingungs-Hypothese 204 nicht korrekt ist), z.B. mit dem folgenden Prompt:
Aufruf der Funktion "mult" mit den Parametern gemäß dieser Schnittstellenspezifikation führt zu einem Laufzeitfehler. Korrigiere bitte die Schnittstellenbeschreibung. Liefere das Ergebnis im JSON-Format. Nach mehreren solchen Beispielaufrufen, die zu keinem Laufzeitfehler führen, würde die Softwareentwicklungsumgebung 104 in einer Ausführungsform die Relaxierungsprüfung 207 durchführen. Dabei kann sie Laufzeitfehler bewusst herbeiführen werden, um die Vorbedingungs-Hypothese 204 zu plausibilisieren. Das heißt, sie generiert Testdaten, die die Vorbedingungs-Hypothese 204 beispielsweise knapp (z.B. bei Parametern, die Zahlenwerte haben, um Eins) verletzen, um dann zu prüfen, ob ein Fehler auftritt (was zu erwarten wäre, wenn die Vorbedingung-Hypothese 204 nicht strenger wäre als nötig). Wenn bei solchen relaxierten Testdaten allerdings kein Fehler auftritt, deutet dies auf eine zu restriktive Vorbedingungs-Hypothese hin. Die Softwareentwicklungsumgebung 104 kann dann das LLM 203 darüber informieren und auffordern, die Vorbedingungs-Hypothese 204 zu relaxieren. Dieser Prozess (inkl. Überprüfung 205) kann (automatisch) iterativ wiederholt werden, bis die Überprüfung 205 positiv ist und bei der Relaxierungsprüfung 207 keine die Vorbedingungs-Hypothese 204 verletzenden Testdaten mehr gefunden werden, die zu keinen Laufzeitfehlern führen. Es können anschließend auch weitere Analyse- und Verifikationstools auf den Programmcode angewendet werden, bis der Vorbedingungs-Hypothese 204 ausreichend vertraut wird. Es könnte hier auch eine Analyse angewendet werden, die affine Beziehungen zwischen Programmvariablen und Intervalle inferiert, um die vom LLM inferierten Bedingungen zu überprüfen. Werden keine Fehler in der Vorbedingungs-Hypothese 204 mehr gefunden, betrachtet die Softwareentwicklungsumgebung 104 sie als ermittelte (und verifizierte) Vorbedingung 209.

Die Softwareentwicklungsumgebung 104 erzeugt dann Testdaten, die die Vorbedingungs-Hypothese 204 erfüllen, um die Funktionalität der Anwendung 105 zu verifizieren (z.B. einzelner Funktionen), z.B. ob eine gewünschte Steuerung erreicht wird, Daten wie gewünscht übertragen werden etc. Um solche Testdaten können verschiedene bekannte Ansätze verwendet werden, z.B. Ansätze für das Fuzzing, LLM-basierte Ansätze, etc. Testet die Softwareentwicklungsumgebung 104 mehrere Funktionen auf einmal oder die Anwendung als Ganzes verifiziert kann sie zur Erzeugung der Testdaten die Vorbedingungs-Hypothesen, die sie für einzelne Funktionen ermittelt hat, berücksichtigen. Beispielsweise erstellt sie die Testdaten so, dass Teile, die von jeweiligen Funktionen der Anwendung verarbeitet werden, deren jeweilige Vorbedingungen erfüllten.

Die Anwendung 105 kann beispielsweise eine Funktionalität auf einem Steuergerät (ECU) implementieren. Beispiele sind Steuergeräte für einen Motor, einen Airbag, einen Scheibenwischer, usw., welche mit der Umgebung über Sensoren und Aktoren interagieren. Ähnlich sind Anwendungen in der Robotik z.B. für Mähroboter oder Transportroboter in einer Fabrik möglich.

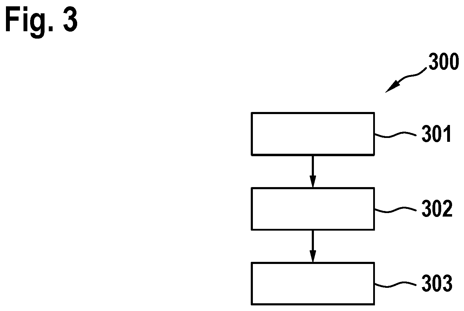

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zur Verifikation eines Computerprogramms gemäß einer Ausführungsform veranschaulicht.

In 301 wird Programmcode mindestens einer Funktion des Computerprogramms einem generativen Sprachmodell zugeführt und das generative Sprachmodell, wird aufgefordert (Vor-)Bedingungen, die von Variablen, die von der mindestens einen Funktion verarbeitet werden, erfüllt werden müssen, um Laufzeitfehler zu vermeiden, zu ermitteln. Dies kann in ein oder mehreren Prompts erfolgen. Das generative Sprachmodell ist beispielsweise ein LLM (Large Language Model).

In 302 werden Testdaten für den Programmcode erzeugt, die Die von dem generativen Sprachmodell in Reaktion auf das Auffordern ausgegebene Menge von Bedingungen erfüllen.

In 303 wird der Programmcodes unter Verwendung der Testdaten verifiziert.

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

Beispielsweise werden Vorbedingungen für Funktionen eines Steuerprogramms für eine Robotervorrichtung ermittelt, um dieses dann zu verifizieren und bei erfolgreicher Verifikation zur Steuerung der Robotervorrichtung einzusetzen. Der Begriff "Robotervorrichtung" kann als sich auf irgendein technisches System (mit einem mechanischen Teil, dessen Bewegung gesteuert wird) beziehend verstanden werden, wie z. B. eine computergesteuerte Maschine, ein Fahrzeug, ein Haushaltsgerät, ein Elektrowerkzeug, eine Fertigungsmaschine, einen persönlichen Assistenten oder ein Zugangssteuersystem.

## Patentansprüche

1. Verfahren zur Verifikation eines Computerprogramms, aufweisend:
Zuführen (301) von Programmcode (201) mindestens einer Funktion des Computerprogramms zu einem generativen Sprachmodell (108, 203) und Auffordern des generativen Sprachmodells (108, 203), Bedingungen (209), die von Variablen, die von der mindestens einen Funktion verarbeitet werden, erfüllt werden müssen, um Laufzeitfehler zu vermeiden, zu ermitteln;
Erzeugen (302) von Testdaten für den Programmcode (201), die eine von dem generativen Sprachmodell (108, 203) in Reaktion auf das Auffordern ausgegebene Menge von Bedingungen (209) erfüllen; und
Verifizieren (303) des Programmcodes (201) unter Verwendung der Testdaten.

2. Verfahren nach Anspruch 1, aufweisend Überprüfen (205) von ein oder mehreren von dem generativen Sprachmodell (108, 203) ermittelten Bedingungen (204) durch Erzeugen von Eingabedaten für die mindestens eine Funktion, die die eine oder mehreren Bedingungen erfüllen und Prüfen, ob bei Ausführung der mindestens einen Funktion für die erzeugten Eingabedaten ein Laufzeitfehler auftritt und in Reaktion darauf, dass bei Ausführung der mindestens einen Funktion für die erzeugten Eingabedaten ein Laufzeitfehler auftritt, Auffordern des generativen Sprachmodells (108, 203), die eine oder mehreren Bedingungen (204) zu überarbeiten.

3. Verfahren nach Anspruch 2, wobei das Auffordern ein wiederholtes Auffordern des generativen Sprachmodells (108, 203), von ihm ausgegebene Bedingungen (204) zu überarbeiten, bis Eingabedaten, die die ausgegebenen Bedingungen (204) erfüllen, zu keinem Laufzeitfehler der mindestens einen Funktion führen, aufweist.

4. Verfahren nach einem der Ansprüche 1 bis 3, aufweisend Überprüfen (207) von ein oder mehreren von dem generativen Sprachmodell (108, 203) ermittelten Bedingungen (204) durch Erzeugen von relaxierten Eingabedaten für die mindestens eine Funktion, die die eine oder mehreren Bedingungen verletzen und
Prüfen, ob bei Ausführung der mindestens einen Funktion für die erzeugten relaxierten Eingabedaten ein Laufzeitfehler auftritt und in Reaktion darauf, dass bei Ausführung der mindestens einen Funktion für die erzeugten relaxierten Eingabedaten kein Laufzeitfehler auftritt, Auffordern des generativen Sprachmodells (108, 203), die eine oder mehreren Bedingungen (204) zu überarbeiten.

5. Verfahren nach Anspruch 4, wobei das Auffordern ein wiederholtes Auffordern des generativen Sprachmodells (108, 203), von ihm ausgegebene Bedingungen (204) zu überarbeiten, bis Eingabedaten, die die ausgegebenen Bedingungen verletzen, zu Laufzeitfehlern der mindestens einen Funktion führen, aufweist.

6. Verfahren nach einem der Ansprüche 1 bis 5, wobei die Bedingungen (209) ein oder mehrere Abhängigkeiten zwischen den Variablen, die von der mindestens einen Funktion verarbeitet werden, umfassen.

7. Verfahren nach einem der Ansprüche 1 bis 6, wobei die Bedingungen (209) ein oder mehrere Bedingungen an ein oder mehrere Argumente, mit der die Funktion aufgerufen wird, umfassen oder sind.

8. Verfahren nach einem der Ansprüche 1 bis 7, wobei die Bedingungen (209) ein oder mehrere Abhängigkeiten zwischen ein oder mehreren Argumenten, mit der die Funktion aufgerufen wird, und ein oder mehreren Datenstrukturen, die vor dem Aufruf der Funktion definiert wurden, sind.

9. Verfahren nach einem der Ansprüche 1 bis 8, wobei die Bedingungen (209) die Bedingung umfassen, dass eine Adresse, die der Funktion als Argument gegeben wird, auf einen Speicherbereich zeigt, der mit einer bestimmten Größe definiert wurde

10. Verfahren nach einem der Ansprüche 1 bis 9, aufweisend Zuführen einer Vorlage für eine Spezifikation der Bedingungen und Auffordern des generativen Sprachmodells (108, 203), die Bedingungen (209) gemäß der Vorlage auszugeben.

11. Verfahren nach Anspruch 10, wobei der Programmcode (201) der mindestens eine Funktion zumindest ein Teil eines Programmcodes (201) für ein Steuerungsprogramm für eine Robotervorrichtung (106) ist.

12. Verfahren nach einem der Ansprüche 1 bis 11, aufweisend, falls das Verifizieren des Programmcodes (201) mittels der Testdaten ein positives Testergebnis liefert, Steuern der Robotervorrichtung (106) mittels des Programmcodes (201).

13. Datenverarbeitungssystem (100) zur Verifikation von Programmcode (201), eingerichtet zum Durchführen eines Verfahrens nach einem der Ansprüche 1 bis 12.

14. Computerprogramm mit Befehlen, die, wenn sie durch einen Prozessor ausgeführt werden, bewirken, dass der Prozessor ein Verfahren nach einem der Ansprüche 1 bis 12 durchführt.

15. Computerlesbares Medium, das Befehle speichert, die, wenn sie durch einen Prozessor ausgeführt werden, bewirken, dass der Prozessor ein Verfahren nach einem der Ansprüche 1 bis 12 durchführt.
